# EUROPEAN PATENT APPLICATION

(11) **EP 2 495 635 A1**
(43) Date of publication of application: **05.09.2012**
(21) Application number: 12157219.2
(22) Date of filing: 28.02.2012
(51) Int. Cl.: G06F 1/16

(54) **Notebook computer**

(30) Priority: 03.03.2011 TW 100107119
(71) Applicant: Acer Incorporated, New Taipei City 22181 (TW)
(72) Inventor: Ling, Cheng-Nan, 22181 Taipei Hsien (TW)
(74) Representative: advotec.

(57) **Abstract**

A notebook computer (100) includes a mainframe (102), and a display body (101) connected pivotally to the mainframe (102). The mainframe (102) includes top and bottom shells (1, 2), an electronic component module (3), and a cover (4, 6). The bottom shell (2) is coupled to the top shell (1), and includes a first engaging unit (22) provided on a bottom side (21) thereof, and a plurality of structural holes (213) formed in the bottom side (21). The electronic component module (3) is disposed between the top and bottom shells (1, 2). The cover (4, 6) includes a cover plate (41, 61), and a second engaging unit (42) provided on the cover plate (41, 61) and engageable releasably with the first engaging unit (22). The cover plate (41, 61) covers the structural holes (213) when the second engaging unit (42) is engaged to the first engaging unit (22).

## Description

The invention relates to a notebook computer, and more particularly to a casing structure of a notebook computer.

A conventional notebook computer includes a mainframe and a display body. The mainframe includes a top shell and a bottom shell that are screwed together, and a plurality of electronic components (such as a motherboard, a central processing unit, a hard disk, etc.) disposed between the top and bottom shells. A keyboard is exposed on the top shell. The bottom shell is formed with a plurality of structural holes, such as screw holes, heat-dissipating holes, etc. The screw holes permit extension of screws therethrough to fasten together the top and bottom shells (or along with the electronic components). When it is required to remove the electronic component (s) from the mainframe, the top and bottom shells must be disengaged from each other first before the electronic component (s) can be removed from the mainframe for repair or replacement.

Moreover, in recent years, to enhance the aesthetic appearance of the notebook computer, an outer cover of the display body is provided with a specially designed pattern or color, or is covered with a special material, such as leather. However, since the bottom shell of the mainframe is filled with the structural holes, it is difficult for the bottom shell to have an appearance consistent with that of the outer cover of the display body.

Therefore, an object of the present invention is to provide a notebook computer having a casing structure with a consistent aesthetic appearance.

Another object of the present invention is to provide a notebook computer that can permit easy access of interior components for repair or replacement.

According to this invention, a notebook computer comprises a mainframe, and a display body connected pivotally to the mainframe. The mainframe includes a top shell, a bottom shell, an electronic component module, and a cover. The bottom shell is coupled to the top shell, and includes a first engaging unit provided on a bottom side of the bottom shell, and a plurality of structural holes formed in the bottom side. The electronic component module is disposed between the top shell and the bottom shell. The cover includes a cover plate, and a second engaging unit provided on the cover plate and engageable releasably with the first engaging unit. The cover plate covers the structural holes when the second engaging unit is engaged to the first engaging unit.

Through the configuration of the cover, when the cover is engaged to the bottom.shell, the structural holes of the bottom shell can be covered so that the appearance of a bottom portion of the mainframe of the notebook computer can be maintained.

Preferably, the structural holes include a plurality of spaced-apart access holes, and the electronic component module includes a plurality of electronic components exposed respectively from the access holes. The electronic components are removable between the top and bottom shells through the access holes. Since the bottom shell is provided with the access holes to expose the electronic components of the electronic component module, when repair or replacement of the electronic component module is required, the cover is disengaged from the bottom shell to facilitate repair or replacement of the electronic component module.

Preferably, the cover plate has an inner surface facing the bottom side of the bottom shell, and an outer surface opposite to the inner surface. The cover further includes at least one positioning mechanism provided on the cover plate. The positioning mechanism includes a movable locking member disposed on the inner surface of the cover plate, and an operating member disposed on the outer surface of the cover plate and coupled to the movable locking member. The operating member is operable to move the movable locking member. The bottom shell further includes a retaining groove to retain the movable locking member. The retaining groove corresponds in number to the movable locking member. The operating member is operable to move the movable locking member to or away from the retaining groove.

Preferably, the cover is provided with a slide groove, and the positioning mechanism further includes a guide stud extending from the operating member into the slide groove to connect fixedly with the movable locking member.

Preferably, the cover plate is formed with a first orifice, and the positioning mechanism further includes a rotatable element disposed on the operating member and having a pin section extendable into the first orifice. The rotatable element is operable to move between an interfering position, where the pin section is inserted into the first orifice so that the movable locking member cannot be moved by the operating member relative to the cover plate, and a non-interfering position, where the pin section moves out from the first orifice so that the operating member can move the movable locking member relative to the cover plate.

Preferably, the operating member includes a first head defining a head opening, and a connecting body extending axially from the first head. The connecting body includes an outer surrounding wall connected to the first head, and an end wall connected to the outer surrounding wall and spaced apart from and facing the head opening. The outer surrounding wall and the end wall cooperatively confine a receiving space communicating with the head opening. The rotatable element is disposed movably in the receiving space and the head opening. The end wall is provided with a second orifice. The operating member is operable to align the second orifice with the first orifice.

Preferably, the rotatable element includes a second head exposed from the head opening, and an inner surrounding wall extending axially from the second head. The pin section extends axially from the second head, and is surrounded by the inner surrounding wall. The inner surrounding wall is formed with an engaging hook that is resiliently and radially deformable and that has a free end projecting outwardly and radially. The outer surrounding wall of the connecting body is formed with an L-shaped guide groove that includes a first groove section extending radially through the outer surrounding wall and elongated angularly, and a second groove section connected to one end of the first groove section and extending axially toward the first head. The engaging hook is disposed in the first groove section when the rotatable element is in the interfering position, and is disposed in the second groove section when the rotatable element is in the non-interfering position.

Preferably, the guide groove further includes a hump disposed in proximity to the other end of the first groove section that is distal from the second groove section to restrict the engaging hook in the other end of the first groove section.

Preferably, the positioning mechanism further includes a biasing member abutting against the end wall of the connecting body and the rotatable element.

Preferably, the slide groove extends in a direction perpendicular to an engaging direction of the second engaging unit with the first engaging unit.

Preferably, the cover further includes a stop post projecting from the inner surface of the cover plate. The movable locking member includes a main body fixed to the guide stud, a tongue and an extension portion extending respectively from two opposite sides of the mainframe, and a projection formed on the extension portion. The tongue is extendable into the retaining groove. When the operating member moves the movable locking member to extend the tongue into or to move the tongue away from the retaining groove, the projection slides frictionally over the stop post.

Preferably, the extension portion has a generally U-shape, and includes two parallel side rod sections, and a bight section interconnecting the side rod sections. Each side rod section has two opposite ends connected respectively to the main body and one end of the bight section. The projection is formed on one of the side rod sections. The stop post extends into the extension portion between the side rod sections. The stop post is disposed between the projection and the bight section when the operating member moves the movable locking member to extend the tongue into the retaining groove, and is disposed between the projection and the main body when the operating member moves the movable locking member to move the tongue away from the retaining groove.

Preferably, the cover further includes a base seat protruding from the inner surface of the cover plate and formed with a first receiving groove. The slide groove is formed in the base seat. The main body of the movable locking member is received slidably in the first receiving groove.

Preferably, the base seat is further formed with a second receiving groove communicating with the first receiving groove. One of the side rod sections is received slidably in the second receiving groove.

Preferably, the bottom shell has a front end face, a rear end face, and a recess region formed in the bottom side and extending between the front end face and the rear end face. The recess region includes a recess rear wall proximate to the rear end face of the bottom shell, and left and right recess sidewalls connected respectively to two opposite ends of the rear end face. The recess region is provided with the first engaging unit and the structural holes. When the cover plate covers the bottom side of the bottom shell, the cover plate is received in the recess region. Thebottomshell further includes two spaced-apart foot rests provided on the bottom side of the bottom shell between the recess rear wall of the recess region and the rear end face of the bottom shell. The cover includes two positioning mechanisms spaced apart from each other in a left-right manner and disposed in proximity to a front edge of the cover plate, and two foot rests disposed respectively on the operating members of the positioning mechanisms.

Preferably, the cover plate includes a first plate portion, and a second plate portion spaced apart from and disposed above the first plate portion. The first plate portion has a surface opposite to the second plate portion and defining the outer surface of the cover plate. The second plate portion has a surface opposite to the first plate portion and defining the inner surface of the cover plate. The first orifice is formed in the second plate portion. The first plate portion is formed with a through hole corresponding in position to the first orifice. When the operating member is disposed on the cover plate, the first head is disposed on the first plate portion, and the connecting body extends between the first and second plate portions through the through hole so that the pin section faces toward the first orifice.

Other features and advantages of the present invention will become apparent in the following detailed description of the preferred embodiments with reference to the accompanying drawings, of which:
Fig. 1 is a bottom perspective view of a notebook computer according to the first preferred embodiment of the present invention;
Fig. 2 is a view similar to Fig. 2, but with a cover removed from a bottom side of a bottom shell;
Fig. 3 is an enlarged perspective view of an encircled portion of Fig. 2;
Fig. 4 is a top perspective view of the cover of the first preferred embodiment;
Fig. 5 is an exploded perspective view of a positioning mechanism of the first preferred embodiment;
Fig. 6 is an enlarged perspective view of an encircled portion of Fig. 4;
Fig. 7 is a view similar to Fig. 6, but illustrating the movable locking member being moved to another position;
Fig. 8 is a fragmentary top perspective view of a cover of a notebook computer according to the second preferred embodiment of this invention;
Fig. 9 is a fragmentary bottom perspective view of the cover of the second preferred embodiment;
Fig. 10 is an exploded top perspective view of a positioning mechanism of the second preferred embodiment;
Fig. 11 is an exploded bottom perspective view of the positioning mechanism of the second preferred embodiment;
Fig. 12 is a fragmentary sectional view of the positioning mechanism of the second preferred embodiment in an assembled state;
Fig. 13 is a perspective view of the positioning mechanism of the second preferred embodiment;
Fig. 14 is a fragmentary schematic view of the second preferred embodiment, illustrating a second orifice in an operating member of the positioning mechanism being non-aligned with a first orifice in the cover; and
Fig. 15 is a view similar to Fig. 14, but illustrating the second orifice in the operating member being aligned with the first orifice in the cover.

The above-mentioned and other technical contents, features, and effects of this invention will be clearly presented from the following detailed description of the two preferred embodiments in coordination with the reference drawings.

Before this invention is described in detail, it should be noted that, in the following description, similar elements are designated by the same reference numerals.

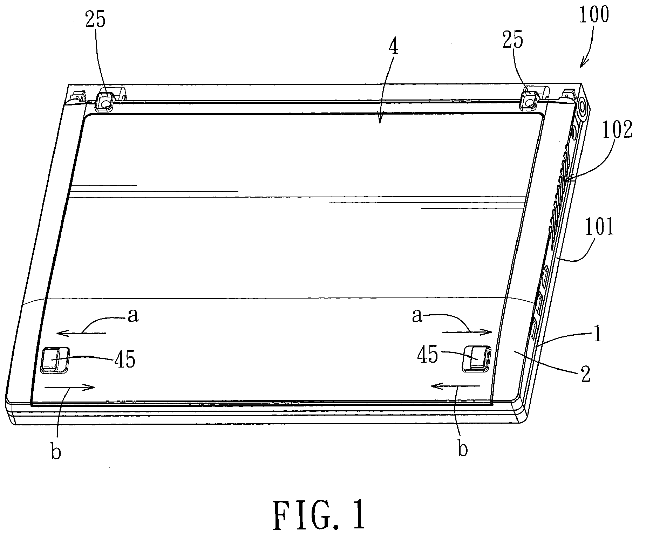

Referring to Figs. 1 to 7, a notebook computer 100 according to the first preferred embodiment of the present invention is shown to comprise a mainframe 102, and a display body 101 connected pivotally to the mainframe 102. The mainframe 102 includes interconnected top and bottom shells 1, 2, an electronic component module 3 disposed between the top and bottom shells 1, 2, and a cover 4 connected to a bottom side 21 of the bottom shell 2. The electronic component module 3, in actual practice, may include electronic components 30, such as a motherboard, a central processing unit, a hard disk, a memory, a chip set, a heat-dissipating fan, etc.

The bottom shell 2, in this embodiment, includes a plurality of spaced-apart first engaging units 22 provided on the bottom side 21, two spaced-apart retaining grooves 23 formed in the bottom side 21, a plurality of structural holes 213 formed in the bottom side 21, and two foot rests 25. The bottom shell 2 has a front end face 210, a rear end face 211, and a recess region 24 formed in the bottom side 21 and extending between the front end face 210 and the rear end face 211. The recess region 24 includes a recess rear wall 241 proximate to the rear end face 211 of the bottom shell 2, left and right recess sidewalls 242 connected respectively to left and right ends of the recess rear wall 241, and a recess bottom wall 243 connected to bottom ends of the recess rear wall 241 and the recess sidewalls 242. In this embodiment, the first engaging units 22 are configured as engaging holes. The first engaging units 22 and the structural holes 213 are formed in the recess bottom wall 243, and are distributed in a central part of the recess bottom wall 243, and in positions proximate to the recess rear wall 241, the recess sidewalls 242, and a front end of the recess bottom wall 243. The structural holes 213 include a plurality of spaced-apart screw holes (213a) and a plurality of spaced-apart access holes (213c). The screw holes (213a) are provided for extension of screws therethrough to connect integrally the bottom shell 2 and the top shell 1. The access holes (213c) have different sizes to correspond to the different electronic components 30 of the electronic component module 3. The electronic components 30 are exposed respectively from the access holes (213c), and are removable between the bottom shell 2 and the top shell 1 through the access holes (213c) to facilitate repair or replacement thereof. Alternatively, the structural holes 213 may further include a plurality of heat-dissipating holes (not shown) for dissipation of heat generated by the electronic components 30 of the electronic component module 3.

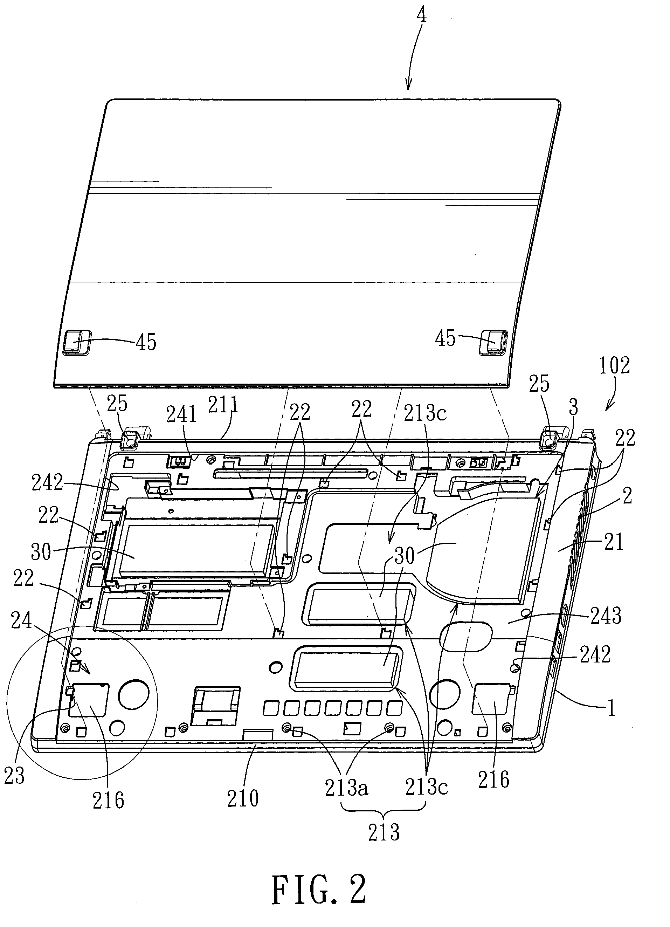

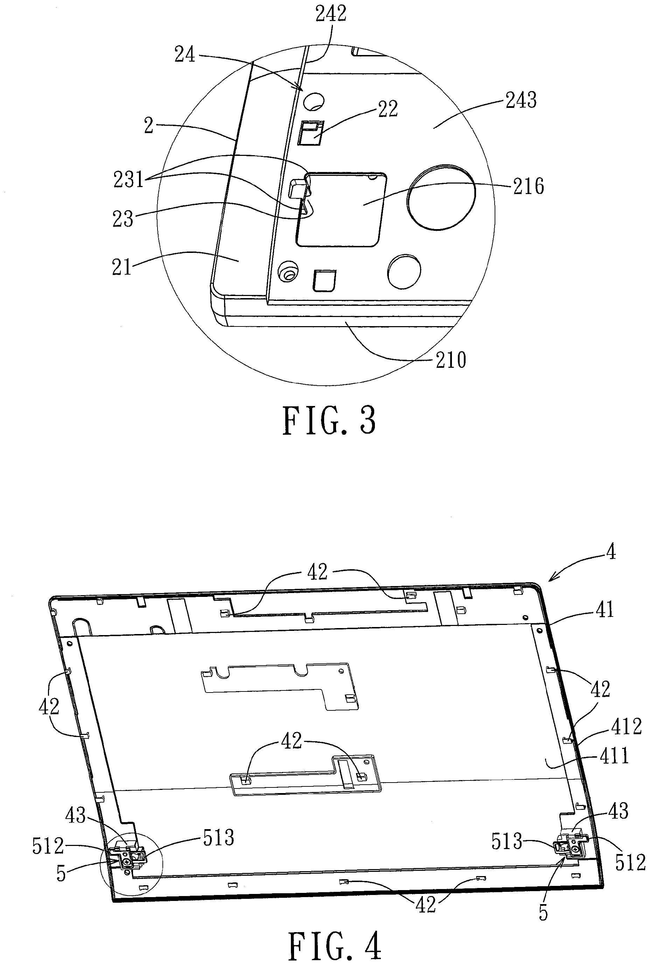

With reference to Figs. 2 and 3, each retaining groove 23 is proximate to the front end of the recess bottom wall 243 and a corresponding one of the left and right recess sidewalls 242, and is defined by two spaced-apart plates 231 that project from the recess bottom wall 243 toward the top shell 1 so that each retaining groove 23 faces the top shell 1. Further, each retaining groove 23 extends toward a respective left or right recess sidewall 242. The recess bottomwall 243 is further formed with two spaced-apart through holes 216 that communicate respectively with the retaining grooves 23 and that are farther from the respective recess sidewalls 242 as compared to the retaining grooves 23.

The two foot rests 25 are provided on the bottom side 21 of the bottom shell 2 between the rear end face 211 of the bottom shell 2 and the recess rear wall 241 of the recess region 24, and are spaced apart from each other in a left-right direction.

With reference to Figs. 2, 4, and 5, the cover 4 includes a cover plate 41, a plurality of second engaging units 42, a pair of base seats 43, two positioning mechanisms 5, and a pair of foot rests 45 connected respectively to the positioning mechanisms 5. The cover plate 41 has a contour and a size conforming to that of the recess region 24, so that the cover plate 41 can be received in the recess region 24 when the cover 4 is connected to the bottom side 21 of the bottom shell 2. The cover plate 41 further has an inner surface 411 facing the bottom side 21 of the bottom shell 2, and an outer surface 412 opposite to the inner surface 411. The outer surface 412 may be designed to have a color, texture, pattern, or material similar to that of a top surface of the display body 101 (see Fig. 1).

The two base seats 43 protrude from the inner surface 411 of the cover plate 41, and are spaced apart from each other in a left-right direction. Each base seat 43 is proximate to a corner formed by a front end and a corresponding lateral end of the cover plate 41, and includes a base wall 431 higher than the inner surface 411 of the cover plate 41, a pair of first lateral walls 432 extending upwardly and respectively from front and rear ends of the base wall 431, a second lateral wall 439 connected between the first lateral walls 432 and having a cutout 4391, a pair of guide walls 433 extending upwardly from the base wall 431 opposite to the second lateral wall 432 and spaced apart from each other in a front-rear direction, and a stop post 434 projecting from the base wall 431 in proximity to the guide walls 433. The base wall 431 is formed with two slide grooves 437 spaced apart in a front-rear direction and extending in a left-right direction. The first lateral walls 431 and the second lateral wall 439 cooperatively define a first receiving groove 435. The cutout 4391 communicates with the first receiving groove 435. The guide walls 433 are spaced apart from each other at a distance smaller than that of the first lateral walls 431, and cooperatively define a second receiving groove 436 having a width smaller than that of the first receiving groove 435 and communicating with one end of the first receiving groove 435.

The second engaging units 42 are configured as engaging pieces formed on the inner surface 411 of the cover plate 41 and engageable releasably and respectively with the first engaging units 22. In this embodiment, each second engaging unit 42 has an L-shaped structure with one end connected to the inner surface 411 and the other end extending toward a rear end of the cover plate 41. The slide grooves 437 in the base wall 431 extend in a direction perpendicular to an engaging direction of the second engaging units 42 with the first engaging units 22.

In this embodiment, the positioning mechanisms 5 are disposed on the cover plate 41, and correspond in position to that of the base seats 43. Each positioning mechanism 5 includes a movable locking member 51 disposed on a respective base seat 43, an operating member 52 disposed on the outer surface 412 of the cover plate 41, and two guide studs 522.

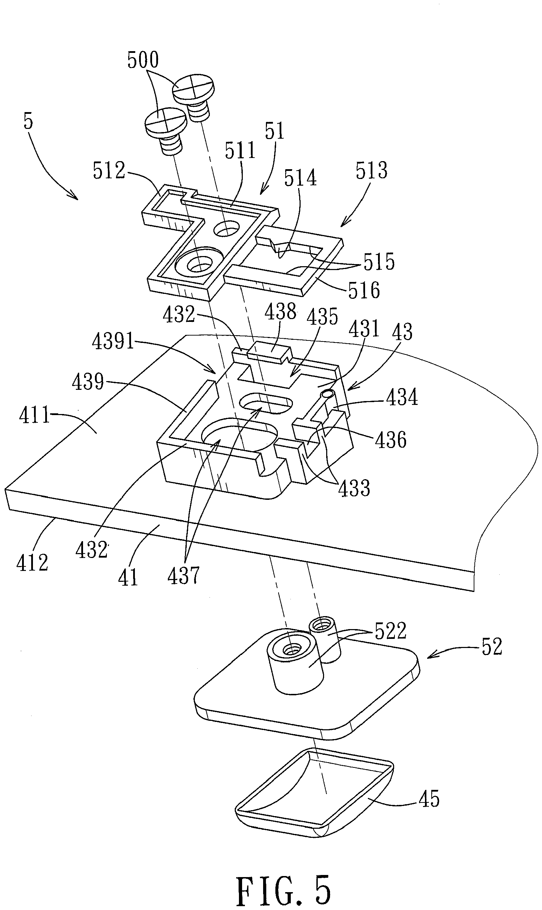

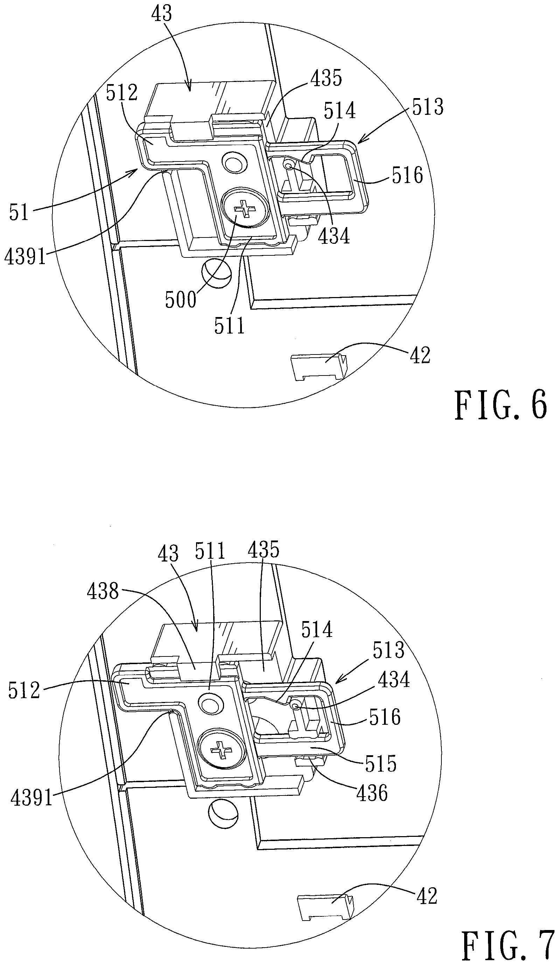

With reference to Figs. 5 and 6, the movable locking member 51 includes a plate-shaped main body 511, a tongue 512 and an extension portion 513 extending outwardly and respectively from left and right sides of the main body 511, and a projection 514 formed on the extension portion 513. The main body 511 is disposed in and is slidable leftward and rightward within the first receiving groove 435. The tongue 512 is disposed slidably in the cutout 4391, and is extendable into the retaining groove 23. The extension portion 513 has a generally U-shape, and includes two parallel side rod sections 515, and a bight section 516 interconnecting the side rod sections 515. Each side rod section 515 has two opposite ends connected respectively to the main body 511 and one end of the bight section 516. One of the side rod sections 515 is disposed in and is slidable leftward and rightward within the second receiving groove 436. The projection 514 projects from one of the side rod sections 515 toward the other side rod section 515. The stop post 434 extends into the extension portion 513 between the side rod sections 515.

The operating member 52 in this embodiment is configured as a plate. The two guide studs 522 extend from an inner surface of the operating member 52 into the respective slide grooves 437 through the cover plate 41. The movable locking member 51 is fixed to the guide studs 522 by extending two screws 500 through the main body 511 of the movable locking member 51 and threaded respectively to the guide studs 52, thereby connecting fixedly the movable locking member 51 to the operating member 52. Through extension of the guide studs 522 into the respective slide grooves 437 and through a screwed connection of the movable locking member 51 with the guide studs 522, the operating member 52 can be operated to move the movable locking member 51 relative to the base seat 43. The retaining groove 23 in the bottom shell 2 corresponds in number to the movable locking member 51. The foot rests 45 are disposed respectively on outer surfaces of the operating members 52 of the positioning mechanisms 5.

With reference to Figs. 2, 3, 6, and 7, to connect the cover 4 to the bottom shell 2, the cover plate 41 is disposed such that the inner surface 411 thereof faces the bottom side 21 of the bottom shell 2 and aligns with the recess region 24. Afterwards, the second engaging units 42 are disposed respectively in the first engaging units 22, and the cover plate 41 is slid rearward relative to the bottom shell 2 to engage the L-shaped second engaging units 42 with the first engaging units 22. At this time, the movable locking members 51 of the two positioning mechanisms 5 are disposed respectively in the through holes 216 of the bottom shell 2, the extension portions 513 of the movable locking members 51 are facing each other, and the tongues 512 thereof are facing away fromeach other (see Fig. 4). Subsequently, the operating members 52 of the positioning mechanisms 5 are moved away from each other in the direction of arrows (a), as shown in Fig. 1, so that the tongues 512 of the movable locking members 51 slide out of the respective base seats 43 through the cutouts 4391 in the base seats 43 to extend into the respective retaining grooves 23 in the bottom shell 2, thereby retaining the cover 4 to the bottom side 212 of the bottom shell 2. At this time, the cover plate 41 of the cover 4 is received within the recess region 23, and the projection 514 slides frictionally over the stop post 434 so that the stop post 434 is disposed between the projection 514 and the bight section 516. The two foot rests 45 and the two foot rests 25 support a bottom portion of the mainframe 102.

It should be noted that, because each second engaging unit 42 has an L-shaped structure with one end extending rearward and engaging the respective first engaging unit 22 in a front-rear direction, and because the tongue 512 of the movable locking member 51 is engaged with the respective retaining groove 23 in a left-right direction which is perpendicular to the engaging direction of the second engaging units 42 with the first engaging units 22, in coordination with the presence of the positioning mechanisms 5, the connection of the cover 4 to the bottom shell 2 is stable and ensured. Hence, the cover 4 cannot be easily removed from the bottom shell 2.

To remove the cover 4 from the bottom shell 2, the operating members 52 are moved toward each other in the direction of arrows (b), as shown in Fig. 1, so as to move the tongues 512 of the movable locking members 51 of the positioning mechanisms 5 from the respective retaining grooves 23. The projection 514 slides frictionally over the stop post 434 so that the stop post 434 is disposed between the projection 514 and the main body 511 at this time. Afterwards, the cover 4 is slid frontward relative to the bottom shell 2 to disengage the second engaging units 42 from the respective first engaging units 22, thereby permitting removal of the cover 4 from the bottom shell 2.

During movement of the movable locking member 51 by the operating member 52, the projection 514 slides frictionally over the stop post 434. Hence, through cooperation of the projection 514 and the stop post 434, a def inite degree of force has to be applied to the movable locking member 51 to remove or engage the tongue 521 from or to the respective retaining groove 23. This results in preventing the movable locking member 51 from moving freely in the presence of an external force.

Referring once again to Figs. 5 and 6, to permit the movable locking member 51 to slide stably in the first receiving groove 435, one of the first lateral walls 432 of the base seat 43 may be formed with a press piece 438 that extends toward the other first lateral wall 432 to press partially the movable locking member 51.

As described above, through the configuration of the cover 4, when the cover 4 is connected to the bottom shell 2, not only are the structural holes 213 in the bottom side 21 of the bottom shell 2 can be covered, but also the overall appearance of the notebook computer can be enhanced because the outer surface 412 of the cover plate 41 of the cover 4 can be configured to have a color, texture, pattern, and material similar to that of the top face of the display body 101. Further, because the bottom shell 2 is provided with the access holes (213c) that expose the electronic components 30 of the electronic component module 3, when repair or replacement of the electronic component/s 30 of the electronic component module 3 is required, the cover 4 is simply removed from the bottom shell 2 to facilitate repair or replacement of the electronic component/s 30. There is no need to disengage the top and bottom shells 1, 2 of the mainframe 102.

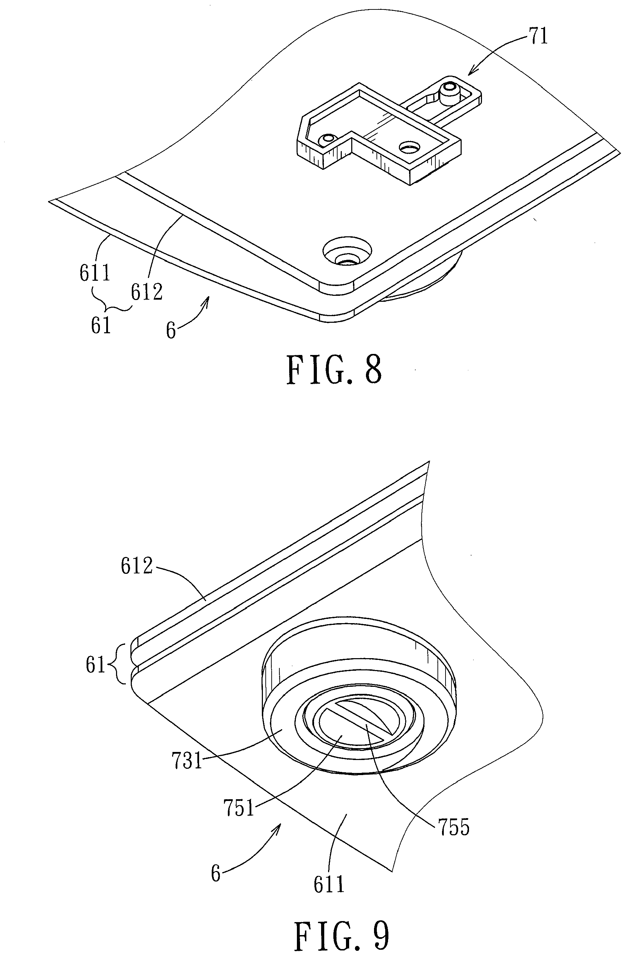

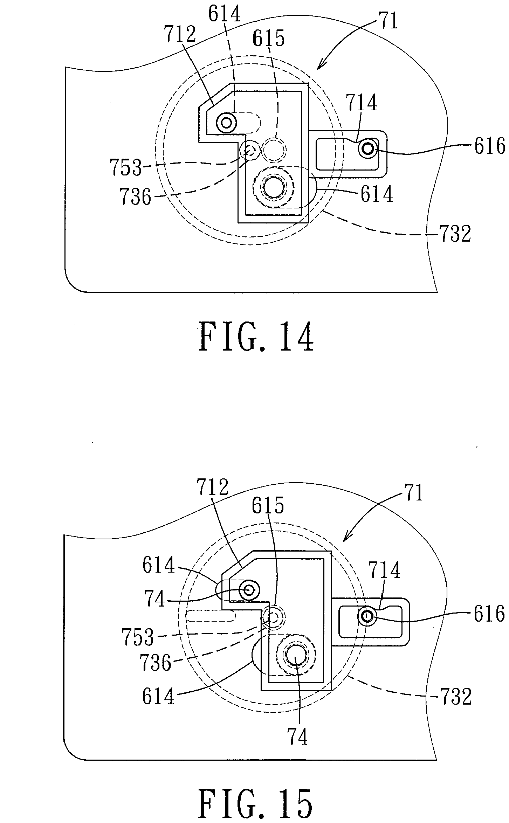

Referring to Figs. 8 to 15, the difference between the first and second preferred embodiments of the present invention resides in the structures of the cover plate 61 of the cover 6 and the positioning mechanisms 7. The drawings of the second preferred embodiment only illustrate the cover plate 61 and one of the positioning mechanisms 7. Hence, only the cover plate 61 and one of the positioning mechanisms 7 will be described hereinafter.

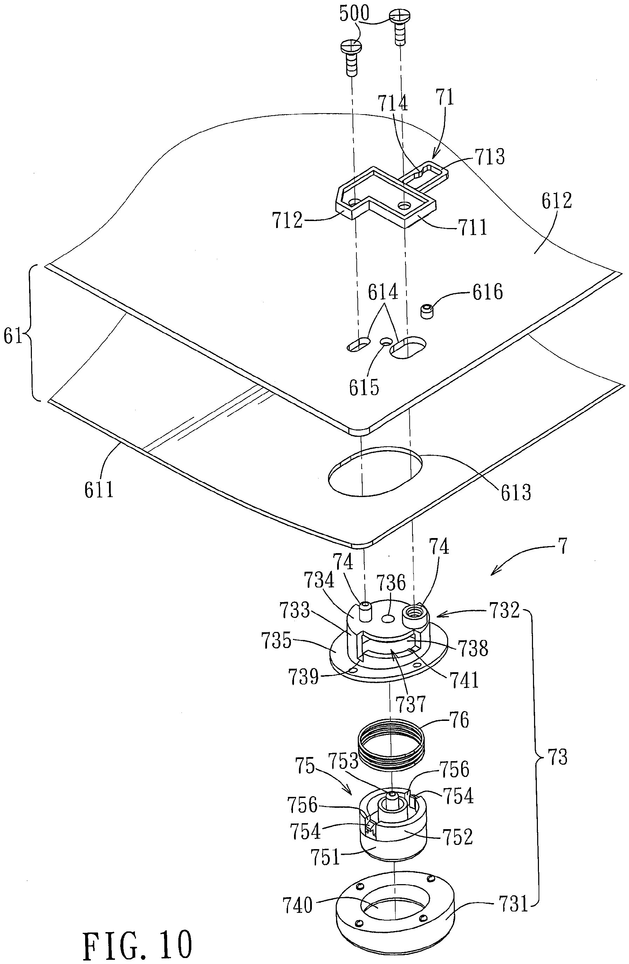

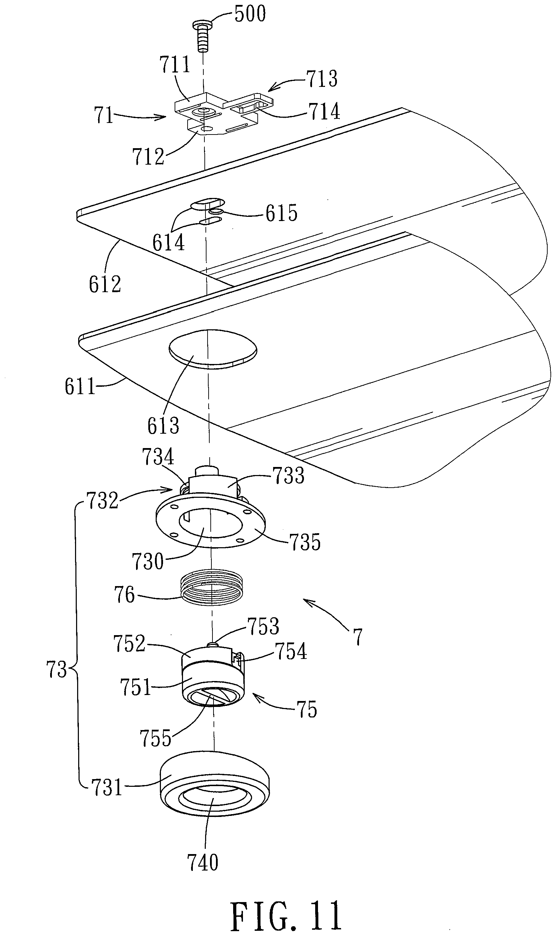

In this embodiment, the cover plate 61 includes a first plate portion 611, and a second plate portion 612 spaced apart from and disposed above the first plate portion 611. The first plate portion 611 has a surface opposite to the second plate portion 612 and defining the outer surface of the cover plate 61. The second plate portion 612 has a surface opposite to the first plate portion 611 and defining the inner surface of the cover plate 61. The first plate portion 611 is formed with a through hole 613 proximate to a corner formed by a front end and a corresponding left or right lateral end of the first plate portion 611 (only the through hole 613 that is formed by the front end and the left lateral end of the first plate portion 611 is shown in Figs. 10 and 11). The through hole 613 has an oval shape, and extends in a left-right direction. The second plate portion 612 has two slide grooves 614 and a first orifice 615 all corresponding in position to the through hole 613. A stop post 616 protrudes from the surface of the second plate portion 612 that is opposite to the first plate portion 611 (i.e., the inner surface of the cover plate 61), and is proximate to the first orifice 615. The second engaging units (not shown) are similarly formed on the inner surface of the cover plate 61.

The positioning mechanism 7 is disposed in a position similar to that described in the first preferred embodiment. The positioning mechanism 7 includes a movable locking member 71, an operating member 73, a plurality of guide studs 74, a rotatable element 75, and a biasing member 76. The structure of the movable locking member 71 is generally identical to that of the first preferred embodiment, and includes a main body 711, a tongue 712, an extension portion 713, and a projection 714 formed on the extension portion 713.

In this embodiment, the operating member 73 includes a first head 731, and a connecting body 732 connected to the first head 731. The first head 731 has a ring structure defining a head opening 740. The connecting body 732 includes a tubular outer surrounding wall 733, an end wall 734 connected to and closing one end of the outer surrounding wall 733, and an annular flange 735 extending outwardly and radially from the other end of the outer surrounding wall 733. The surrounding wall 733 and the endwall 734 cooperatively confine a receiving space 730 communicating with the head opening 740. The end wall 734 is formed with a second orifice 736 at the center thereof. The guide studs 74 extend upwardly from the end wall 734, and are disposed respectively on two opposite sides of the second orifice 736. The connecting body 732 is connected to the first head 731 through the flange 735 such that the connecting body 732 extends inwardly and axially from the first head 731, and the end wall 734 is spaced apart from and faces the head opening 740.

The outer surrounding wall 733 of the connecting body 732 is formed with two angularly spaced-apart L-shaped guide grooves 737. Each guide groove 737 includes a first groove section 738 extending radially through the outer surrounding wall 733 and elongated angularly, and a second groove section 739 connected to one end of the first groove section 738 and extending axially toward the flange 735. The first groove section 738 includes a hump 741 disposed in proximity to the other end of the first groove section 738 that is opposite to the second groove section 739.

With reference to Figs. 10 to 13, the rotatable element 75 is received movably in the receiving space 730 and the head opening 740, and includes a second head 751 exposed from the head opening 740, an inner surrounding wall 752 extending axially and inwardly from an outer periphery of the second head 751, and a pin section 753 extending axially from the second head 751 and surrounded by the inner surrounding wall 752. In this embodiment, the inner surrounding wall 752 is formed with two diametrically opposite indentations 756, and two engaging hooks 754 disposed respectively in the indentations 756. Each engaging hook 754 is resiliently and radially deformable, and has a free end projecting outwardly and radially. The second head 751 is formed with a rotatable dial piece 755. The biasing member 76 is configured as a compression spring received in the receiving space 730, and has two opposite ends abutting respectively against the end wall 734 and a top surface of the inner surrounding wall 752.

During assembly, the connecting body 732 of the operating member 73 extends into the through hole 613 of the first plate portion 611, and is disposed between the first and second plate portions 611, 612. The end wall 734 faces the second plate portion 612, and the two guide studs 74 extend respectively into the two slide grooves 614 in the second plate portion 612. Further, the first head 731 is disposed externally of the first plate portion 611. The movable locking member 71 is disposed on the second plate portion 612, and is fixed to the guide studs 74 by extending two screws 500 through the main body 711 and engaged threadedly to the respective guide studs 74. The stop post 616 extends into the U-shaped extension portion 713 of the operating member 73.

Further, the pin section 753 of the rotatable element 75 extends into the receiving space 730 and faces the second orifice 736, and the second head 751 is exposed at the head opening 740 and is pressable toward the end wall 734. Moreover, the engaging hooks 754 extend resiliently and respectively into the two guide grooves 737, and the biasing member 76 is disposed between the end wall 734 and the inner surrounding wall 752 so as to bias the rotatable element 75 toward the first head 731. With the engaging hooks 754 engaging against bottom groove walls of the second groove sections 739 of the respective guide grooves 737, the rotatable element 75 can be prevented from ejecting out of the operating member 73 through the biasing force of the biasing member 76.

When the rotatable element 75 is in a normal unpressed state, the rotatable element 75 is biased by the biasing member 76 toward the first head 731, and the engaging hooks 754 are engaged to the bottom groove walls of the second groove sections 739 of the respective guide grooves 737. When the second head 751 of the rotatable element 75 is pressed toward the end wall 734 and compresses the biasing member 76, the pin section 753 can extend out of the end wall 734 via the second orifice 736. As the second head 751 is continuously pressed until each engaging hook 754 slides into one end of the first groove section 738 of the respective guide groove 737, the second head 751 is then rotated to slide each engaging hook 754 along the first groove section 738 of the respective guide groove 737 over the hump 741 into the other end of the first groove section 738 that is opposite to the second groove section 739. Because each engaging hook 754 is restricted in the other end of the first groove section 738 by the hump 741, the pin section 753 can be retained in a state that projects out of the end wall 734.

When the rotatable element 75 is rotated again to slide each engaging hook 754 in a reversed direction that slides over the hump 741 and that extends along the first groove section 738 into a junction of the first and second groove sections 738, 739, through a returning force of the biasing member 76, the rotatable element 75 is pushed to move in a direction away from the end wall 734, and the pin section 753 is retracted into the receiving space 730 of the connecting body 732.

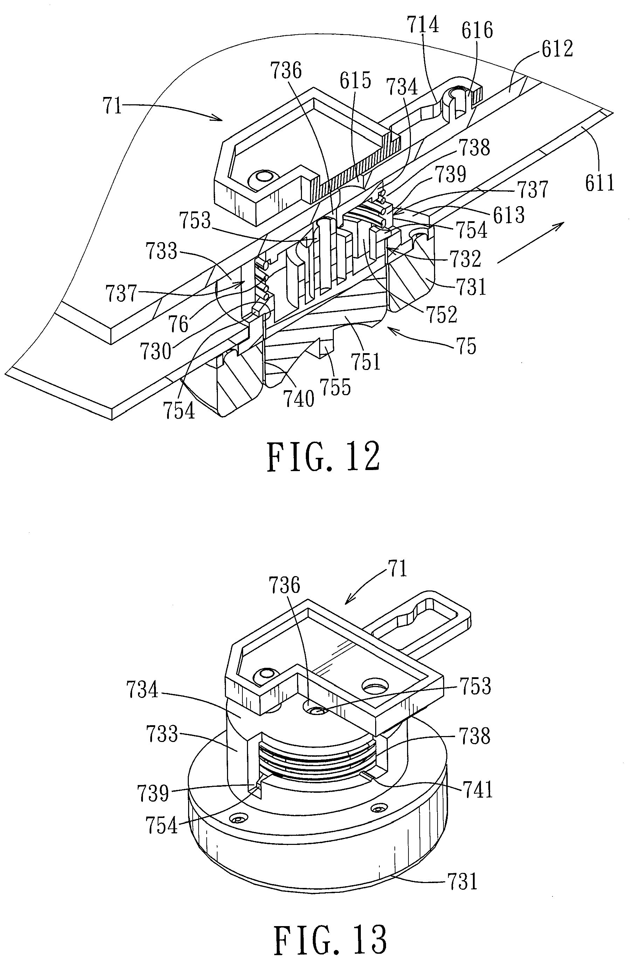

With reference to Figs. 12 to 15, the operating member 73 is similarly operable so as to move the connecting body 732 within the through hole 613 and to slide the guide studs 74 within the respective slide grooves 614 so that the tongue 712 of the movable locking member 71 can move to engage or disengage the retaining groove 23 in the bottom shell 2 (see Fig. 2). It should be noted that through the relative position of the first and second orifices 615, 736, when the operating member 73 is operated to move the tongue 712 to engage the retaining groove 23 (see Figs. 2 and 3), the second orifice 736 is aligned with the first orifice 615. By pressing the rotatable element 75, the pin section 753 can extend through the second orifice 736 into the first orifice 615 so as to dispose the rotatable element 75 in an interfering position. The engaging hook 754 is slid into the junction of the first and second groove sections 738, 739 at this time. The rotatable element 75 is then rotated to a certain angle to slide the engaging hook 754 to the other end of the first groove section 738 to be restricted therein by the hump 741, to maintain the rotatable element 75 in a pressed state, and to maintain the pin section 753 in the first orifice 615. At this interfering position of the rotatable element 75, the operating member 73 cannot move the movable locking member 71 relative to the cover plate 61.

To permit the operating member 73 to move the movable locking member 71 relative to the cover plate 61, the rotatable element 75 is rotated in a reverse direction to slide the engaging hook 754 over the hump 741 and back into the junction of the first and second groove sections 738, 739. Through the returning force of the biasing member 76, the engaging hook 754 is slid into the second groove section 739, and the rotatable element 75 is moved away from the end wall 734. At this time, the pin section 753 moves out from the first orifice 615 and is retracted into the receiving space 730 of the connecting body 732, thereby disposing the rotatable element 75 in a non-interfering position. That is, the interference between the rotatable element 75 and the second plate portion 612 is released. The operating member 73 can then be operated to move therealong the movable locking member 71.

In this embodiment, the inner surface of the cover 6 (that is, the surface of the second plate portion 612 that is opposite to the first plate portion 611) may also be formed with a base seat similar to that described in the first preferred embodiment to mount the movable locking member 71 thereto.

The advantage of the second preferred embodiment is similar to that described in the first preferred embodiment. Hence, the objects of the present invention can be realized.

## Claims

1. A notebook computer (100) comprising:
a mainframe (102) including
a top shell (1);
a bottom shell (2) coupled to said top shell (1), and including a first engaging unit (22) provided on a bottom side (21) of said bottom shell (2), and a plurality of structural holes (213) formed in said bottom side (21);
an electronic component module (3) disposed between said top shell (1) and said bottom shell (2) ; and
a cover (4, 6) including a cover plate (41, 61), and a second engaging unit (42) provided on said cover plate (41, 61) and engageable releasably with said first engaging unit (22), said cover plate (41, 61) covering said structural holes (213) when said second engaging unit (42) is engaged to said first engaging unit (22); and
a display body (101) connected pivotally to said mainframe (102).

2. The notebook computer (100) as claimed in Claim 1, wherein said structural holes (213) includes a plurality of spaced-apart access holes (213c), said electronic component module (3) including a plurality of electronic components (30) exposed respectively from said access holes (213c), said electronic components (30) being removable between said top and bottom shells (1, 2) through said access holes (213c).

3. The notebook computer (100) as claimed in Claim 2, wherein said structural holes (213) further include a plurality of spaced-apart screw holes (213a).

4. The notebook computer (100) as claimed in Claim 1, wherein said cover plate (41, 61) has an inner surface (411) facing said bottom side (21) of said bottom shell (2), and an outer surface (412) opposite to said inner surface (411), said cover (4, 6) further including at least one positioning mechanism (5, 7) provided on said cover plate (41, 61), said positioning mechanism (5, 7) including a movable lockingmember (51, 71) disposed on said inner surface (411) of said cover plate (41, 61), and an operating member (52, 73) disposed on said outer surface (412) of said cover plate (41, 61) and coupled to said movable locking member (51, 71), said operating member (52, 73) being operable to move said movable lockingmember (51, 71), saidbottomshell (2) further including a retaining groove (23) to retain said movable locking member (51, 71), said retaining groove (23) corresponding in number to said movable locking member (51, 71), said operating member (52, 73) being operable to move said movable locking member (51, 71) to or away from said retaining groove (23).

5. The notebook computer (100) as claimed in Claim 4, wherein said cover (4) is provided with a slide groove (437), said positioning mechanism (5) further including a guide stud (522) extending from said operating member (52) into said slide groove (437) to connect fixedly with said movable locking member (51).

6. The notebook computer (100) as claimed in Claim 4, wherein said cover plate (61) is formed with a first orifice (615), said positioning mechanism (7) further including a rotatable element (75) disposed on said operating member (73) and having a pin section (753) extendable into said first orifice (615), said rotatable element (75) being operable to move between an interfering position, where said pin section (753) is inserted into said first orifice (615) so that said movable locking member (71) cannot be moved by said operating member (73) relative to said cover plate (61), and a non-interfering position, where said pin section (753) moves out from said first orifice (615) so that said operating member (73) can move said movable locking member (71) relative to said cover plate (61).

7. The notebook computer (100) as claimed in Claim 6, wherein said operating member (73) includes a first head (731) defining a head opening (740), and a connecting body (732) extending axially from said first head (731), said connecting body (732) including an outer surrounding wall (733) connected to said first head (731), and an end wall (734) connected to said outer surrounding wall (733) and spaced apart from and facing said head opening (740), said outer surrounding wall (733) and said end wall (734) cooperatively confining a receiving space (730) communicating with said head opening (740), said rotatable element (75) being disposed movably in said receiving space (730) and said head opening (740), said end wall (734) being provided with a second orifice (736), said operating member (73) being operable to align said second orifice (736) with said first orifice (615).

8. The notebook computer (100) as claimed in Claim 7, wherein said rotatable element (75) includes a second head (751) exposed from said head opening (740), and an inner surrounding wall (752) extending axially from said second head (751), said pin section (753) extending axially from said second head (751) and surrounded by said inner surrounding wall (752), said inner surrounding wall (752) being formed with an engaging hook (754) that is resiliently and radially deformable and that has a free end projecting outwardly and radially, said outer surrounding wall (733) of said connecting body (732) being formed with an L-shaped guide groove (737), said guide groove (737) including a first groove section (738) extending radially through said outer surrounding wall (733) and elongated angularly, and a second groove section (739) connected to one end of said first groove section (738) and extending axially toward said first head (731), wherein, said engaging hook (754) is disposed in said first groove section (738) when said rotatable element (75) is in said interfering position, and is disposed in said second groove section (739) when said rotatable element (75) is in said non-interfering position.

9. The notebook computer (100) as claimed in Claim 8, wherein said guide groove (737) further includes a hump (741) disposed in proximity to the other end of said first groove section (738) that is distal from said second groove section (739) to restrict said engaging hook (754) in said other end of said first groove section (738).

10. The notebook computer (100) as claimed in Claim 8, wherein said positioning mechanism (7) further includes a biasing member (76) abutting against said end wall (734) of said connecting body (732) and said rotatable element (75).

11. The notebook computer (100) as claimed in Claim 5, wherein said slide groove (437) extends in a direction perpendicular to an engaging direction of said second engagingunit (42) with said first engaging unit (22).

12. The notebook computer (100) as claimed in Claim 11, wherein said cover (4) further includes a stop post (434) projecting from said inner surface (411) of said cover plate (411), said movable locking member (51) including a main body (511) fixed to said guide stud (522), a tongue (512) and an extension portion (513) extending respectively from two opposite sides of said main body (511), andaprojection (514) formed on said extension portion (513), said tongue (512) being extendable into said retaining groove (23), wherein, when said operating member (52) moves said movable locking member (51) to extend said tongue (512) into or to move said tongue (512) away from said retaining groove (23), said projection (514) slides frictionally over said stop post (434).

13. The notebook computer (100) as claimed in Claim 12, wherein said extension portion (513) has a generally U-shape, and includes two parallel side rod sections (515), and a bight section (516) interconnecting said side rod sections (515), each of said side rod sections (515) having two opposite ends connected respectively to said main body (511) and one end of saidbight section (516), saidprojection (514) being formed on one of said side rod sections (515), said stop post (434) extending into said extension portion (513) between said side rod sections (515), wherein, said stop post (434) is disposed between said projection (514) and said bight section (516) when said operating member (52) moves said movable locking member (51) to extend said tongue (512) into said retaining groove (23), and is disposed between said projection (514) and said main body (511) when said operating member (52) moves said movable locking member (51) to move said tongue (512) away from said retaining groove (23).

14. The notebook computer (100) as claimed in Claim 13, wherein said cover (4) further includes a base seat (43) protruding from said inner surface (411) of said cover plate (41) and formed with a first receiving groove (435), said slide groove (437) being formed in said base seat (43), said main body (511) of said movable locking member (51) being received slidably in said first receiving groove (435).

15. The notebook computer (100) as claimed in Claim 14, wherein said base seat (43) is further formed with a second receiving groove (436) communicating with said first receiving groove (435), one of said side rod sections (515) being received slidably in said second receiving groove (436).
